(19) Europäisches Patentamt
European Patent Office
Office européen des brevets

(11) **EP 4 209 549 A1**

(12) **EUROPEAN PATENT APPLICATION**
published in accordance with Art. 153(4) EPC

(43) Date of publication:
   **12.07.2023 Bulletin 2023/28**

(21) Application number: **21863996.1**

(22) Date of filing: **29.07.2021**

(51) International Patent Classification (IPC):
   $C08L\ 47/00^{(2006.01)}$  $C08L\ 75/04^{(2006.01)}$
   $C09J\ 109/00^{(2006.01)}$  $C09J\ 175/04^{(2006.01)}$

(52) Cooperative Patent Classification (CPC):
   **C08L 47/00; C08L 75/04; C09J 109/00;
   C09J 175/04**

(86) International application number:
   **PCT/JP2021/028036**

(87) International publication number:
   **WO 2022/049938 (10.03.2022 Gazette 2022/10)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **01.09.2020 JP 2020146688**

(71) Applicant: **DIC Corporation**
   **Tokyo 174-8520 (JP)**

(72) Inventors:
   • **MIYAKE, Junichi**
     **Takaishi-shi, Osaka 592-0001 (JP)**
   • **YAMAMOTO, Shinya**
     **Takaishi-shi, Osaka 592-0001 (JP)**

(74) Representative: **Beckmann, Claus**
   **Kraus & Weisert**
   **Patentanwälte PartGmbB**
   **Thomas-Wimmer-Ring 15**
   **80539 München (DE)**

(54) **AQUEOUS RESIN COMPOSITION, COATING AGENT, AND ADHESIVE**

(57)    Provided is an aqueous resin composition containing a composite resin (A) and an aqueous medium (B). The composite resin (A) contains a vinyl polymer (A1) and a urethane resin (A2). The vinyl polymer (A1) contains a unit derived from a conjugated diene compound. The composite resin (A) has a hydroxy group and/or a thiol group. The aqueous resin composition is preferably used as an adhesive and a coating agent because the aqueous resin composition can exhibit a strong adhesive force and reduce a moisture permeability even during adhering of dissimilar base materials, for example, a rubber base material and a resin base material.

**Description**

TECHNICAL FIELD

The present invention relates to an aqueous resin composition, a coating agent, and an adhesive.

BACKGROUND ART

An aqueous resin composition is used in various applications such as paper coating and impregnation, fiber and unwoven fabric, carpet, civil engineering and construction materials, mortar cement, automatic vehicle parts, tire cords, paint, paste, rust-preventive coating, adhesives, plastic modification, cosmetic puffs, electronic materials, adhesives (generally for rubbers), coating and impregnation (unwoven fabric and paper), fiber impregnation and reinforcing fiber processing (carpet and the like), moisture-proof and water-resistant coating, cement and mortar, construction material processing and wood-based adhesion, synthetic leather, artificial leather, gloves, contraceptive devices, ink receptors, and ink dispersants.

Various characteristics are required for the aqueous resin composition depending on the applications, and an aqueous resin composition obtained by combining different resins has been proposed. For example, PTL 1 describes an aqueous resin containing a blocked copolymer composed of a vinyl polymer segment and a polyurethane segment having an acid group and/or an acid group neutralized with a basic compound. In addition, PTL 2 describes a composition containing an aqueous polyurethane and a latex obtained by seed polymerization of a diene unsaturated monomer in the presence of a seed latex. PTL 3 describes a resin composition containing a hydrogenated derivative of a hydroxy group-containing conjugated diene polymer and other aqueous resins in the same micelle.

CITATION LIST

PATENT LITERATURE

   PTL 1: JPH06-199968A
   PTL 2: JP2004-231852A
   PTL 3: JP2004-224868A

SUMMARY OF INVENTION

TECHNICAL PROBLEM

The composite resin is expected to have both characteristics of the resins to be composited, and the use of the composite resin as an adhesive has been studied. However, during adhering of dissimilar base materials, for example, a rubber base material and a resin base material, an adhesive force of a composite resin in the related art may not be sufficiently satisfactory, and a gas barrier property (for example, water vapor, and oxygen) may not be sufficiently satisfactory.

The invention has been made in view of the above problems, and an object of the invention is to provide an aqueous resin composition which exhibits a strong adhesive force and has a good gas barrier property (for example, water vapor, and oxygen) even during adhering of dissimilar base materials, for example, a rubber base material and a resin base material.

SOLUTION TO PROBLEM

The inventors have found that by using a combination of specific resins as a composite resin, although the composite resin is homogeneous during application, phase separation occurs between a plurality of resins contained in the composite resin during thermocompression bonding, and segregation occurs depending on the type of the base material so that the adhesive force can be improved, and a hydroxy group and a thiol group contained in the composite resin form a hydrogen bond so that a gas barrier property (for example, water vapor, and oxygen) can be prevented, and have completed the invention.

That is, the aqueous resin composition of the invention contains a composite resin (A) and an aqueous medium (B). The composite resin (A) contains a vinyl polymer (A1) and a urethane resin (A2). The vinyl polymer (A1) contains a unit derived from a conjugated diene compound. The composite resin (A) has a hydroxy group and/or a thiol group.

ADVANTAGEOUS EFFECTS OF INVENTION

By using the aqueous resin composition of the invention, in the case of using the aqueous resin composition as an adhesive, a strong adhesive force can be exhibited even during adhering of dissimilar base materials, for example, a rubber base material and a resin base material, and in the case of using the aqueous resin composition as a coating agent, a surface property can be freely adjusted while the adhesiveness to the rubber base material is good, and the gas barrier property (for example, water vapor, and oxygen) can be improved.

DESCRIPTION OF EMBODIMENTS

An aqueous resin composition of the invention contains a composite resin (A) and an aqueous medium (B). The composite resin (A) contains a vinyl polymer (A1) and a urethane resin (A2), and has a hydroxy group and/or a thiol group. In the composite resin (A), at least one of the vinyl polymer (A1) and the urethane resin (A2) preferably has a hydroxy group and/or a thiol group, and at least the urethane resin (A2) preferably has a hydroxy group. In addition, both of the vinyl polymer (A1) and the urethane resin (A2) may have a hydroxy group.

The total functional group values of the hydroxy group and the thiol group is preferably 5,000 g/mol or less, more preferably 4,000 g/mol or less, and still more preferably 3,000 g/mol or less, and may be, for example, 10 g/mol or more, 30 g/mol or more, or 50 g/mol or more.

The vinyl polymer (A1) represents a polymer having a unit derived from a vinyl monomer (a). The vinyl monomer (a) represents a compound having at least one polymerizable vinyl bond in one molecule. As the vinyl monomer (a), one type or two or more types may be used. The vinyl monomer (a) contains a conjugated diene compound (a1), may contain a vinyl compound (a2) having a hydroxy group and/or a thiol group, and the other vinyl compound (a3), and may contain the vinyl compound (a3) having a glycidyl group. The vinyl monomer (a) can contain a compound (a2) having a hydroxy group and/or a thiol group, or a compound (a3) having a glycidyl group is used as the vinyl monomer (a), and a compound having a total of two or more of the glycidyl group and the hydroxy group and/or the thiol group is further allowed to react, and whereby the composite resin (A) can have a hydroxy group and/or a thiol group.

As the diene compound (a1), one type or two or more types may be used. Examples thereof include 1,3 -butadiene, isoprene, 2,3-dimethyl-1,3-butadiene, 1,3-pentadiene, 1,3-hexadiene, 1,3-heptadiene, 2,3-dimethylbutadiene, 2-phenyl-1,3-butadiene, 3-methyl-1,3-pentadiene, and 2-chloro-1,3-butadiene.

The content of the conjugated diene compound (a1) in the total amount of the vinyl monomer (a) is preferably 1% by mass or more, more preferably 10% by mass or more, and still more preferably 30% by mass or more, and the upper limit thereof is 100% by mass.

The vinyl compound (a2) having a hydroxy group and/or a thiol group represents a compound having a hydroxy group and/or a thiol group and a vinyl group. Examples of the vinyl compound (a2) having a hydroxy group or a thiol group include: hydroxy group-containing monomers such as 2-hydroxyethyl (meth)acrylate, 2-hydroxypropyl (meth)acrylate, 2-hydroxybutyl (meth)acrylate, 4-hydroxybutyl (meth)acrylate, 2-hydroxyethyl vinyl ether, 4-hydroxybutyl vinyl ether, and 2-hydroxyethyl allyl ether; and thiol group-containing monomers such as 2-sulfanylethyl (meth)acrylate, 2-sulfanylpropyl (meth)acrylate, 2-sulfanylbutyl (meth)acrylate, 4-sulfanylbutyl (meth)acrylate, 2-sulfanylethyl vinyl ether, 4-sulfanylbutyl vinyl ether, and 2-sulfanylethyl allyl ether.

The content of the vinyl compound (a2) having a hydroxy group and/or a thiol group in the total amount of the vinyl monomer (a) is preferably 1% by mass or more, more preferably 5% by mass or more, and still more preferably 10% by mass or more, and is preferably 100% by mass or less, more preferably 70% by mass or less, and still more preferably 50% by mass or less.

Examples of the vinyl compound (a3) having a glycidyl group include glycidyl (meth)acrylate and allyl glycidyl ether.

The content of the vinyl compound (a3) having a glycidyl group in the total amount of the vinyl monomer (a) is preferably 1% by mass or more, more preferably 5% by mass or more, and still more preferably 10% by mass or more, and is preferably 100% by mass or less, more preferably 70% by mass or less, and still more preferably 50% by mass or less.

As the other vinyl compound (a4), one type or two or more types may be used. Examples of the other vinyl compound (a4) include: alkyl (meth)acrylates having 4 to 22 carbon atoms, such as methyl (meth)acrylate, ethyl (meth)acrylate, propyl (meth)acrylate, butyl (meth)acrylate, isobutyl (meth)acrylate, tert-butyl (meth)acrylate, pentyl (meth)acrylate, 3-methyl butyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, dodecyl (meth)acrylate, tridecyl (meth)acrylate, steallyl (meth)acrylate, isosteallyl (meth)acrylate, and hexadecyl (meth)acrylate;

cycloalkyl (meth)acrylates having 6 to 20 carbon atoms, such as cyclopentyl (meth)acrylate, cyclohexyl (meth)acrylate, and isobornyl (meth)acrylate;

allyl (meth)acrylates such as phenyl (meth)acrylate;

aralkyl (meth)acrylates having 10 to 20 carbon atoms, such as benzyl (meth)acrylate and phenethyl (meth)acrylate;

allyloxyalkyl (meth)acrylates such as phenoxyethyl (meth)acrylate;

crotonic acid alkyl esters such as methyl crotonate and ethyl crotonate;

unsaturated dicarboxylic acid alkyl esters such as dimethyl maleate, dibutyl maleate, dimethyl fumarate, dibutyl fumarate, dimethyl itaconate, and dibutyl itaconate;

aromatic vinyl monomers such as styrene, p-tert-butylstyrene, $\alpha$-methylstyrene, vinyltoluene, vinylpyridine, chlorostyrene, and chloromethylstyrene;

nitrogen atom-containing monomers (preferably one substituted or two substituted (meth)acrylamides (including a compound in which a substituent is bonded and a ring is formed)), such as (meth)acrylonitrile, crotononitrile, (meth)acrylamide, N-methyl (meth)acrylamide, N-isopropyl (meth)acrylamide, N-hydroxyethyl (meth)acrylamide, N-methylol (meth)acrylamide, N-methoxyethyl (meth)acrylamide, N,N-dimethyl (meth)acrylamide, N,N-diethyl (meth)acrylamide, N,N-dimethylaminoethyl (meth)acrylate, N,N-dimethylaminopropyl (meth)acrylamide, N,N-diethylaminoethyl (meth)acrylate, N,N-diethylaminopropyl (meth)acrylate, N-(meth)acryloylmorpholine, N-(meth)acryloylpyrrolidine, N-vinylformamide, N-vinylpyrrolidone, N-vinylimidazole, N-vinylcarbazole, N-vinylquinoline, and N-vinylpiperidine, and methyl chloride salts of the nitrogen atom-containing monomers;

halogenated olefins such as vinyl fluoride, vinylidene fluoride, tetrafluoroethylene, chlorotrifluoroethylene, hexafluoropropylene, vinyl chloride, and vinylidene chloride; $\alpha$-olefins such as ethylene, propylene, isobutylene, and 1-butene;

carboxylic acid vinyl esters such as vinyl acetate, vinyl propionate, vinyl pivalate, vinyl versatate, vinyl benzoate, and vinyl neodecanoate;

alkyl vinyl ethers such as methyl vinyl ether, ethyl vinyl ether, n-butyl vinyl ether, and isobutyl vinyl ether; cycloalkyl vinyl ethers such as cyclohexyl vinyl ether;

carbonyl group-containing monomers such as acrolein and methyl vinyl ketone;

polyoxyethylene group-containing (meth)acrylic monomer such as polyethylene glycol (meth)acrylate, methoxy polyethylene glycol (meth)acrylate, polyethylene glycol polypropylene glycol copolymerized (meth)acrylate, methoxy polyethylene glycol polypropylene glycol copolymerized (meth)acrylate, polyethylene glycol polytetramethylene glycol copolymerized (meth)acrylate, and methoxy polyethylene glycol polytetramethylene glycol copolymerized (meth)acrylate;

fluoroalkyl group-containing monomers such as perfluorocyclohexyl (meth)acrylate, di-perfluorocyclohexyl fumarate, and N-isopropyl fluorooctane sulfonic acid amide ethyl (meth)acrylate;

unsaturated dicarboxylic acid anhydrides such as maleic anhydride, citraconic anhydride, mesaconic anhydride, itaconic anhydride, and tetrahydrophthalic anhydride;

cyclic ether-containing monomers such as tetrahydrofurfuryl (meth)acrylate;

silyl group-containing monomers such as vinyltrichlorosilane, vinyltriethoxysilane, vinyl tris $\beta$-methoxyethoxy)silane, and $\gamma$-(meth)acryloxypropyltrimethoxysilane;

vinyl group-containing sulfonic acid compounds such as vinyl sulfonic acid, 3-acryloxypropane-1-sulfonic acid, 3-acryloxyoctyloxybenzene sulfonic acid, 3-acryloxybenzene diazosulfonic acid, 3-acryloxyazobenzene-4'-sulfonic acid, 2-acryloylamino-2-methylpropane-1-sulfonic acid, 2-acryloylamide-2-methylpropane sulfonic acid, and acrylonitrile-tert-butyl sulfonic acid, and salts thereof.

The content of the other vinyl compound (a4) in the total amount of the vinyl monomer (a) is preferably 1% by mass or more, more preferably 5% by mass or more, and still more preferably 10% by mass or more, and is preferably 80% by mass or less, more preferably 60% by mass or less, and still more preferably 50% by mass or less.

The total content of the conjugated diene compound (a1), the thiol reactive vinyl compound (a2), and the other vinyl compound (a3) in the total amount of the vinyl monomer (a) is preferably 70% by mass or more, more preferably 80% by mass or more, and still more preferably 90% by mass or more, and is preferably 100% by mass or less.

Examples of the compound having two or more hydroxy groups and/or thiol groups include: a polyol (b1) described later; the polythiol compounds such as: aliphatic polythiol compounds such as bis(2-mercaptoethylthio) propane-1-thiol, methanedithiol, 1,2-ethanedithiol, 1,2,3-propanetrithiol, 1,2-cyclohexanedithiol, bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1, 11-dimercapto-3,6,9-trithiaundecane, 4,8-dimercaptomethyl-1, 1 1-dimercapto-3,6,9-trithiaundecane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, 2,5-dimercaptomethyl-1,4-dithiane, 2,5-dimercapto-1,4-dithiane, 2,5-dimercaptomethyl-2,5-dimethyl-1,4-dithiane, and esters of thioglycolic acid and mercaptopropionic acid thereof, hydroxymethyl sulfide bis(2-mercaptoacetate), hydroxymethyl sulfide bis(3-mercaptopropionate), hydroxyethylsulfide bis(2-mercaptoacetate), hydroxyethylsulfide bis (3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionate bis(2-mercaptoethyl ester), 1,1,3,3-tetrakis(mercaptomethylthio) propane, 1,1,2,2-tetrakis(mercaptomethylthio) ethane, 4,6-bis(mercaptomethylthio)-1,3-dithiane, tris(mercaptomethylthio) methane, and tris(mercaptoethylthio) methane; aromatic polythiol compounds such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptomethyleneoxy) benzene, 1,3,5-tris(mercaptoethyleneoxy) benzene, 2,5-toluenedithiol, 3,4-toluenedithiol, 1,5-naphthalenedithiol, and 2,6-naphthalenedithiol; and heterocyclic polythiol compounds such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio) ethyl)-1,3-dithiethane; and thiol compounds having a hydroxy group such as 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate).

A glass transition temperature of the vinyl polymer (A1) is preferably -100°C or higher, more preferably -80°C or higher, and is preferably 120°C or lower, more preferably 100°C or lower, still more preferably 50°C or lower, yet more preferably 25°C or lower.

A glass transition temperature Tg(A1) of the vinyl polymer (A1) represents a value obtained by converting a glass transition temperature Tga at an absolute temperature obtained by the following formula (FOX formula) into degrees Celsius.

$$1/Tga = \Sigma(Wi/Tgi)$$

In the above formula, Tga represents a glass transition temperature (unit: absolute temperature) of the polymer composed only of vinyl monomers (a) used for synthesizing the vinyl polymer (A1). Wi represents a mass ratio of vinyl monomers (a) in a raw material of the vinyl polymer (A1). Tgi represents a glass transition temperature (unit: absolute temperature) of a homopolymer composed only of vinyl monomers (a).

Details of the FOX formula are described in Bulletin of the American Physical Society, Series 2, volume 1, No.3, page 123 (1956). In addition, as the glass transition temperature (Tgi) of the homopolymer of various monomers to be calculated by the FOX formula, for example, numerical values described in coating and paint (Paint publisher, 10 (No.358), 1982) can be adopted.

The content of the vinyl polymer (A1) in the composite resin (A) is preferably 0.1% by mass or more, more preferably 1% by mass or more, still more preferably 10% by mass or more, yet still more preferably 20% by mass or more, and particularly preferably 30% by mass or more, and is preferably 90% by mass or less, more preferably 70% by mass or less, still more preferably 60% by mass or less, and yet still more preferably 50% by mass or less.

The urethane resin (A2) is a resin having a urethane bond in the molecule, and preferably contains a urethane resin (A2-1) having a hydroxy group and/or a thiol group. When the urethane resin (A2-1) having a hydroxy group and/or a thiol group is contained, the urethane resin (A2) may have a hydroxy group and/or a thiol group.

Examples of the urethane resin (A2-1) having a hydroxy group and/or a thiol group include: a reaction product of the polyol (b1), a polyisocyanate (b2), a sulfur atom-containing compound (c) having a group capable of reacting with an isocyanate group and having 4 or less carbon atoms per sulfur atom, and a chain extender (b3) used as necessary and/or an alcohol compound (b4) having a polymerizable unsaturated group; and a reaction product of a compound (d) having at least two 5-membered cyclic carbonate structures and a compound (e) having at least two amino groups.

When the chain extender (b3) is used, the urethane resin (A2) can be obtained as a reaction product of the chain extender (b3) and a reaction product of a raw material containing at least the polyol (b1) and the polyisocyanate (b2).

As the polyol (b1), one type or two or more types may be used. Examples thereof include a polyether polyol, a polyester polyol, a polycarbonate polyol, and a polyolefin polyol. The polyol (b1) preferably includes a polymer polyol (having a number average molecular weight of 500 or more, preferably 3,000 or less) such as a polyester polyol and a polycarbonate polyol, and may include a polyol having a hydrophilic group or a low molecular weight polyol (having a number average molecular weight of less than 500, preferably 50 or more) as necessary.

Examples of the polyether polyol include those obtained by addition polymerization (ring-opening polymerization) of alkylene oxide using, as an initiator, one type or two or more types of compounds having 2 or more active hydrogen atoms.

Examples of the initiator include: linear diols such as ethylene glycol, diethylene glycol, triethylene glycol, trimethylene glycol, 1,2-propanediol, 1,3-propanediol, 1,3-butanediol, 1,4-butanediol, and 1,6-hexanediol; branched-chain diols such as neopentyl glycol; triols such as glycerin, trimethylolethane, trimethylolpropane, and pyrogallol; polyols such as sorbitol, sucrose, and aconite sugar; tricarboxylic acids such as aconitic acid, trimellitic acid, and hemimellitic acid; phosphoric acids; polyamines such as ethylenediamine and diethylenetriamine; triisopropanol amines; phenolic acids such as dihydroxybenzoic acid and hydroxyphthalic acid; and 1,2,3-propane trithiol.

Examples of the alkylene oxide include ethylene oxide, propylene oxide, butylene oxide, styrene oxide, epichlorohydrin, and tetrahydrofuran.

As the polyether polyol, a polyoxytetramethylene glycol obtained by addition polymerization (ring-opening polymerization) of tetrahydrofuran with the initiator is preferably used.

Examples of the polyester polyol include: a polyester polyol obtained by an esterification reaction of a low molecular weight polyol (for example, a polyol having a molecular weight of 50 or more and 500 or less) and a polycarboxylic acid; a polyester polyol obtained by a ring-opening polymerization reaction of a cyclic ester compound such as ε-caplolactone; and a copolymerized polyester polyol thereof.

As the low molecular weight polyol, a polyol having a molecular weight of 50 or more and 500 or less can be used. Examples thereof include: aliphatic polyols having 2 or more and 6 or less carbon atoms, such as ethylene glycol, propylene glycol, 1,4-butanediol, 1,5-pentanediol, 1,6-hexanediol, 3-methyl-1,5-pentanediol, diethylene glycol, dipropylene glycol, neopentyl glycol, and 1,3-butanediol; alicyclic structure-containing polyols such as 1,4-cyclohexanediol and cyclohexanedimethanol; and aromatic structure-containing polyols such as bisphenol compounds such as bisphenol A and bisphenol F, and alkylene oxide adducts thereof.

Examples of the polycarboxylic acid include: aliphatic polycarboxylic acids such as succinic acid, adipic acid, sebacic acid, and dodecanedicarboxylic acid; aromatic polycarboxylic acids such as terephthalic acid, isophthalic acid, phthalic acid, and naphthalene dicarboxylic acid; and anhydrides or ester-forming derivatives of the aliphatic polycarboxylic acids and the aromatic polycarboxylic acids.

Examples of the polycarbonate polyol include: a reaction product of a carbonic acid ester and a polyol; and a reaction product of phosgene, bisphenol A, and the like.

Examples of the carbonic acid ester include methyl carbonate, dimethyl carbonate, ethyl carbonate, diethyl carbonate, cyclocarbonate, and diphenyl carbonate.

Examples of the polyol capable of reacting with the carbonic acid ester include: polyols exemplified as the low molecular weight polyol; and high molecular weight polyols (for example, which has a weight average molecular weight of 500 or more and 5,000 or less) such as a polyether polyol (such as polyethylene glycol or polypropylene glycol) and a polyester polyol (such as polyhexamethylene adipate).

Examples of the polyolefin polyol include a polyisobutene polyol, a hydrogenated polybutadiene polyol, and a hydrogenated polyisoprene polyol.

The total content of the polymer polyols (preferably polyether polyol, polyester polyol, polycarbonate polyol, and polyolefin polyol) that fall within the polyol (b 1) is preferably 30% by mass or more, more preferably 40% by mass or more, and is preferably 100% by mass or less in the polyol (b 1).

Examples of the hydrophilic group contained in the polyol having a hydrophilic group include an anionic group, a cationic group, and a nonionic group. By using the polyol having a hydrophilic group, the water dispersibility of the composite resin (A) can be improved. As the polyol having a hydrophilic group, for example, a polyol other than the polyether polyol, the polyester polyol, the polycarbonate polyol, and the polyolefin polyol can be used. Specifically, a polyol having an anionic group, a polyol having a cationic group, and a polyol having a nonionic group can be used. Among them, it is preferable to use a polyol having an anionic group or a polyol having a cationic group.

Examples of the polyol having an anionic group include a polyol having a carboxy group and a polyol having a sulfonic acid group.

Examples of the polyol having a carboxy group include: hydroxy acids such as 2,2-dimethylol propionic acid, 2,2-dimethylol butanoic acid, 2,2-dimethylol butyric acid, and 2,2-dimethylol valeric acid; and a reaction product of the polyol having a carboxy group and the polycarboxylic acid. The hydroxy acid is preferably 2,2-dimethylol propionic acid.

Examples of the polyol having a sulfonic acid group include: dicarboxylic acids having a sulfonic acid group, such as 5-sulfoisophthalic acid, sulfoterephthalic acid, 4-sulfophthalic acid, and 5- (4-sulfophenoxy) isophthalic acid; and a polyester polyol obtained by reacting a salt of the dicarboxylic acid with the aromatic structure-containing polyol.

Examples of the polyol having a cationic group include N-methyl-diethanolamine, and polyols having a tertiary amino group, such as a polyol obtained by reacting a compound having two epoxy groups per molecule with a secondary amine.

Examples of the polyol having a nonionic group include a polyol having a polyoxyethylene structure.

When a polyol having a hydrophilic group falls within the polyol (b1), the content thereof is preferably 0.3 parts by mass or more, more preferably 1 part by mass or more, still more preferably 2% by mass or more, and particularly preferably 5% by mass or more, and is preferably 30 parts by mass or less, more preferably 20 parts by mass or less, and still more preferably 10 parts by mass or less, relative to a total of 100 parts by mass of the polyol (b1).

Examples of the low molecular weight polyol include: alkanediols such as ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, and 1,6-hexanediol; cycloalkanedialkanols such as cyclohexanedimethanol; and polyols having a polymerizable unsaturated group.

Examples of the polyol having a polymerizable unsaturated group include a compound represented by the following formula (1) and a compound represented by the following formula (2).
[Chem. 1]

$$HO-R^1-OH \qquad (1)$$

[In the formula (1), $R^1$ represents a linear alkylene group having a side chain having an atomic group containing a polymerizable unsaturated group.]
[Chem. 2]

$$HO-R^1O-R^2-OR^3-OH \qquad (2)$$

[In the formula (2), $R^1$ and $R^3$ each may independently have a side chain having an atomic group containing a polymerizable unsaturated group, and the total number of the atomic groups containing the polymerizable unsaturated group, which are contained in $R^1$ and $R^3$, is one or more. $R^2$ represents an alkylene group having 1 to 20 carbon atoms.]

Examples of the atomic group containing a polymerizable unsaturated group include a vinyl group, a vinyloxy group, and a (meth)acryloyl group. $R^1$ and $R^3$ may have a side chain having a hydroxy group in addition to a side chain having an atomic group containing a polymerizable unsaturated group.

Examples of the linear alkylene group represented by $R^1$ and $R^3$ include a methylene group, an ethylene group, a propylene group, a butanediyl group, a pentanediyl group, a hexanediyl group, a heptanediyl group, an octanediyl group, and a nonanediyl group. The number of carbon atoms of the linear alkylene group is 1 or more, preferably 2 or more, and for example, 50 or less, preferably 20 or less, more preferably 6 or less, more preferably 5 or less, and particularly preferably 2.

In the compound represented by the formula (1) and the compound represented by the formula (2), the number of side chains having an atomic group containing a polymerizable unsaturated group per molecule is 1 or more, preferably 2 or more, and for example, 10 or less, and preferably 5 or less.

Examples of the compound represented by the formula (1) include pentaerythritol (meth)acrylate, pentaerythritol di(meth)acrylate [dimethylolpropane di(meth)acrylate], trimethylolmethane (meth)acrylate, dimethylolmethane di(meth)acrylate, triethylolmethane (meth)acrylate, diethylolmethane di(meth)acrylate, triethylolpropane (meth)acrylate, diethylolpropane di(meth)acrylate, tripropanolmethane (meth)acrylate, dipropanolmethane di(meth)acrylate, tripropanolpropane (meth)acrylate, dipropanolpropane di(meth)acrylate, tributanolmethane (meth)acrylate, dibutanolmethane di(meth)acrylate, tributanolpropane (meth)acrylate, and dibutanolpropane di(meth)acrylate.

Examples of the compound represented by the formula (2) include bis(3-acryloyloxy-2-hydroxypropoxy) methane, 1,2-bis(3-acryloyloxy-2-hydroxypropoxy) eta, 1,3-bis(3-acryloyloxy-2-hydroxypropoxy) propane, 1,4-bis(3-acryloyloxy-2-hydroxypropoxy) butane, and 1,5-bis(3-acryloyloxy-2-hydroxypropoxy) pentane.

As the polyisocyanate (b2), one type or two or more types may be used. Examples thereof include: aromatic polyisocyanates such as 4,4'-diphenylmethane diisocyanate, 2,4'-diphenylmethane diisocyanate, carbodiimide modified diphenylmethane diisocyanate, crude diphenylmethane diisocyanate, phenylene diisocyanate, triene diisocyanate, naphthalene diisocyanate, xylylene diisocyanate, and tetramethylxylylene diisocyanate; aliphatic polyisocyanates such as hexamethylene diisocyanate and lysine diisocyanate; and alicyclic structure-containing polyisocyanates such as cyclohexane diisocyanate, hydrogenated xylylene diisocyanate, isophorone diisocyanate, and dicyclohexylmethane diisocyanate.

A molar ratio (NCO/OH) of -NCO contained in the polyisocyanate (b2) to -OH contained in the polyol (b1) is preferably 0.3 or more, more preferably 0.5 or more, and still more preferably 0.8 or more, and is preferably 5.0 or less, more preferably 3.0 or less, and still more preferably 2.0 or less.

As the chain extender (b3), one type or two or more types can be used. Examples thereof include: diamines such as ethylene diamine, 1,2-propane diamine, 1,6-hexamethylene diamine, isophoronediamine, 4,4'-dicyclohexyl methane diamine, 3,3'-dimethyl-4,4'-dicyclohexyl methane diamine, and 1,4-cyclohexane diamine; N-hydroxymethyl aminoethylamine, N-hydroxyethyl aminoethylamine, N-hydroxypropyl aminopropylamine, N-ethyl aminoethylamine, and N-methyl aminopropylamine; polyamines such as diethylenetriamine, dipropylenetriamine, and triethylenetetramine;

hydrazine compounds such as hydrazine, N,N'-dimethylhydrazine, 1,6-hexamethylenebishydrazine, succinic acid dihydrazide, adipic acid dihydrazide, glutaric acid dihydrazide, sebacic acid dihydrazide, isophthalic acid dihydrazide, and β-semicarbazide propionic acid hydrazide; cyclic polyamines such as piperazine and 2,5-dimethylpiperazine; glycols such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; and phenols such as bisphenol A, 4,4'-dihydroxydiphenyl, 4,4'-dihydroxydiphenyl ether, 4,4'-dihydroxydiphenyl sulfone, hydrogenated bisphenol A, and hydroquinone, and water.

The number of polymerizable unsaturated groups contained in the alcohol compound (b4) having a polymerizable unsaturated group is 1 or more, and is, for example, 20 or less, preferably 15 or less, and more preferably 10 or less.

Examples of the alcohol compound (b4) having a polymerizable unsaturated group include: monoalcohol compounds; hydroxyalkyl (meth)acrylates (the number of carbon atoms of the hydroxyalkyl group is, for example, 2 to 10, preferably 2 to 5) such as hydroxyethyl (meth)acrylate, hydroxypropyl (meth)acrylate, and hydroxybutyl (meth)acrylate; di(meth)acrylate compounds of triols such as trimethylolpropane di(meth)acrylate and glycerol di(meth)acrylate; tri(meth)acrylate compounds of tetraols, such as pentaerythritol tri(meth)acrylate and ditrimethylolpropane tri(meth)acrylate; polyalkoxy (preferably polyethoxy, polypropoxy, and the like) compounds such as a di(meth)acrylate compound of the triol and a tri(meth)acrylate compound of the tetraol; and blocked copolymer equivalents such as a di(meth)acrylate compound of the triol and a tri(meth)acrylate compound of the tetraol.

In the sulfur atom-containing compound (c) having a group capable of reacting with an isocyanate group and having 4 or less carbon atoms per sulfur atom, examples of the group capable of reacting with an isocyanate group include a hydroxy group, a thiol group, and an amino group, and a hydroxy group and a thiol group are preferred. In the sulfur compound (c), the number of groups capable of reacting with an isocyanate group per molecule is 2 or more, and preferably 2.5 or more, and is preferably 4 or less, and more preferably 3 or less on average.

Examples of the sulfur atom-containing compound (c) include 2,3-bis[(2-mercaptoethyl) thio]-1-propanethiol(GST), bis(2-mercaptoethyl) sulfide(MES), 2,2'-thiodiethanol, and mercaptoethanol.

The content of the sulfur atom-containing compound (c) in the total 100 parts by mass of the polyol (b 1), the sulfur atom-containing compound (c), and the chain extender (b3) used as necessary is preferably 35 parts by mass or more, more preferably 40 parts by mass or more, and still more preferably 50 parts by mass or more, and is preferably 100 parts by mass or less, more preferably 70 parts by mass or less, and still more preferably 60 parts by mass or less.

Examples of the compound (d) having at least two 5-membered cyclic carbonate structures include: a reaction product of a polyepoxy compound and carbon dioxide; and a reaction product of glycerol-1,2-carbonate and a reaction product of the polyol (b 1), the polyisocyanate (b2), and the chain extender (b3) used as necessary and/or the alcohol compound (b4) having a polymerizable unsaturated group.

The polyepoxy compound may be obtained as a reaction product of the polyol (d1) and epichlorohydrin. Examples of the polyol (d1) include compounds similar to the compounds exemplified as the polyol (b 1).

Examples of the compound (e) having at least two amino groups include chain aliphatic polyamines such as ethylenediamine, 1,3-diaminopropane, 1,4-diaminobutane, 1,6-diaminohexane (also referred to as hexamethylenediamine), 1,8-diaminooctane, 1,10-diaminodecane, and 1,12-diaminododecane, cyclic aliphatic polyamines such as isophoronediamine, norbornanediamine, 1,6-cyclohexanediamine, piperazine, and 2,5-diaminopyridine, aliphatic polyamines having an aromatic ring such as xylylenediamine (also referred to as metaxylenediamine), and aromatic polyamines such as metaphenylenediamine and diaminodiphenylmethane.

The other urethane resin (A2-2) is preferably a reaction product of the polyol (b1) and the polyisocyanate (b2), and the chain extender (b3) used as necessary and/or the alcohol compound (b4) having a polymerizable unsaturated group.

When the urethane resin (A2) has an anionic group, the aqueous resin composition may contain a basic compound. Examples of the basic compound include: organic amines such as ammonia, triethylamine, morpholine, monoethanolamine, and diethyl ethanol amine; and metal hydroxides containing sodium hydroxide, potassium hydroxide, lithium hydroxide, and the like. From the viewpoint of improving the aqueous dispersion stability of the aqueous resin composition, the molar ratio of the basic compound to the anionic group (basic group/anionic group) is preferably 0.5 or more and 3.0 or less, and more preferably 0.8 or more and 2.0 or less.

When the urethane resin (A2) has an anionic group, the acid value of the urethane resin (A2) is preferably 0.1 mgKOH/g or more, more preferably 5 mgKOH/g or more, and still more preferably 10 mgKOH/g or more, and is preferably 100 mgKOH/g or less, more preferably 70 mgKOH/g or less, and still more preferably 50 mgKOH/g or less.

The acid value in the present specification is a theoretical value calculated as the number of mg of potassium hydroxide required to neutralize 1 g of the urethane resin (A2) based on the calculated amount of the anionic group contained in the urethane resin (A2) based on the raw material composition.

When the urethane resin (A2) has a cationic group, the aqueous resin composition may contain: a carboxylic acid such as formic acid, acetic acid, propionic acid, succinic acid, glutaric acid, and adipic acid; a hydroxy acid such as tartaric acid; and an acidic compound such as phosphoric acid. A part or all of the tertiary amino group as the cationic group may be quaternized with a quaternizing agent such as dimethyl sulfate, diethyl sulfate, methyl chloride, and ethyl chloride.

When the urethane resin (A2) has a cationic group, the amine value of the urethane resin (A2) is preferably 2 mgKOH/g or more and 50 mgKOH/g or less, and more preferably 5 mgKOH/g or more and 30 mgKOH/g or less.

The amine value in the present specification is a theoretical value calculated as a product of the number of moles (mmol) of hydrogen chloride and the amount of potassium hydroxide (56.1 g/mol) required to neutralize 1 g of the urethane resin (A2) based on the calculated amount of the cationic group contained in the urethane resin (A2) based on the raw material composition.

The amount of urea bonding groups in the urethane resin (A2) is, for example, 1.0 mol/g or less, preferably 0.1 mol/g or less, and more preferably 0.01 mol/g or less, and the lower limit is 0 mol/g. The amount of urea bonding groups can be calculated as a theoretical value based on the raw materials used in the synthesis of the urethane resin (A2).

The weight average molecular weight of the urethane resin (A2) is preferably 3,000 or more, more preferably 5,000 or more, still more preferably 10,000 or more, yet still more preferably 30,000 or more, and is preferably 1,000,000 or less, more preferably 500,000 or less, and still more preferably 300,000 or less.

In the present specification, the weight average molecular weight and the number average molecular weight can be measured by gel permeation chromatography (GPC) using polystyrene as a standard sample, unless otherwise specified.

The glass transition temperature of the urethane resin (A2) is preferably -80°C or higher, more preferably -50°C or higher, and still more preferably -20°C or higher, and is preferably 120°C or lower, more preferably 100°C or lower, and still more preferably 80°C or lower. When the glass transition temperature of the urethane resin (A2) is within the above range, the mobility of the urethane resin (A2) is good, and the effect of the invention is easily exhibited.

A difference (Tg(A2) - Tg(A1)) between a glass transition temperature Tg(A2) of the urethane resin (A2) and the glass transition temperature Tg(A1) of the vinyl polymer (A1) is -40°C or higher, preferably -30°C or higher, more preferably -20°C or higher, and still more preferably 0°C or higher, and is 140°C or lower, preferably 130°C or lower, more preferably 120°C or lower, still more preferably 100°C or lower, yet still more preferably 90°C or lower, and particularly preferably 80°C or lower. When the difference between the glass transition temperatures is in the range (Tg(A2) - Tg(A1)), the balance between the mobility of the urethane resin (A2) and the mobility of the vinyl polymer (A1) is good, and a coating film having a hydrophobic surface can be formed by heating.

The glass transition temperature of the urethane resin (A2) can be measured by a differential scanning calorimeter (DSC).

The content of the urethane resin (A2) relative to 1 part by mass of the vinyl polymer (A1) is preferably 0.1 parts by mass or more, more preferably 0.5 parts by mass or more, and still more preferably 1 part by mass or more, and is preferably 100 parts by mass or less, more preferably 10 parts by mass or less, and still more preferably 3 parts by mass or less.

The total content of the vinyl polymer (A1) and the urethane resin (A2) in the composite resin (A) is preferably 70% by mass or more, more preferably 80% by mass or more, and still more preferably 90% by mass or more, and the upper limit is 100% by mass.

The gel fraction of the composite resin (A) is preferably 0.01% by mass or more, more preferably 1% by mass or more, still more preferably 3% by mass or more, and yet still more preferably 10% by mass or more, and the upper limit is 100% by mass, for example, is allowed to be 90% by mass or less, and more preferably 80% by mass or less.

The gel fraction of the composite resin (A) can be measured, for example, by the following method. First, the aqueous resin composition of the invention is applied onto a glass plate such that a film thickness after drying is 0.5 mm, dried at 80°C for 2 hours, followed by being peeled off from the glass plate, further dried at 140°C for 5 minutes, and then cut into a circle having a diameter of 29 mm to obtain a sample. The weight of the sample before immersion in a solvent is measured and defined as G1. Next, after the sample is immersed in toluene at a room temperature for 24 hours, a solvent-insoluble component of the sample is separated by filtration through an 80-mesh wire mesh, dried at 110°C for 1 hour, and then weighed and defined as G2. The value obtained based on the following formula is defined as the gel fraction.

$$\text{Gel fraction (\% by mass)} = (G2/G1) \times 100$$

In the composite resin (A), at least a part of the surface of the vinyl polymer (A1) is preferably covered with the urethane resin (A2), and a layer of the urethane resin (A2) is preferably formed on the surface of the vinyl polymer (A1). The vinyl polymer (A1) generally has high hydrophobicity and is difficult to be dispersed in water as it is, but since the urethane resin (A2) covers at least a part of the surface of the vinyl polymer (A1), dispersibility in an aqueous medium is improved. The vinyl polymer (A1) and the urethane resin (A2) may or may not be chemically bonded.

The composite resin can be produced by polymerizing the vinyl monomers (a) in the aqueous medium (B) described below in the presence of the urethane resin (A2). Since the vinyl monomer (a) is hydrophobic, when the vinyl monomer (a) coexists with the urethane resin (A2) in the aqueous medium (B), at least a part of the vinyl monomers (a) is incorporated into the urethane resin (B2), and a polymerization reaction is performed in this state, and whereby the composite resin (A) of the invention can be produced.

More specifically, the urethane resin (A2) is preferably subjected to polymerization of the vinyl monomer (a) in a state (preliminary dispersion liquid) of being dispersed in the aqueous medium (B). The preliminary dispersion liquid obtained by dispersing the urethane resin (A2) in the aqueous medium (B) can be produced, for example, by reacting the polyol (b 1) and the polyisocyanate (b2) in the absence of a solvent or in the presence of an organic solvent, and further reacting the chain extender (b3) as necessary. The organic solvent may be partially or entirely removed by distillation under a reduced pressure and the like during or after the production of the urethane resin (A2) from the viewpoints of safety and environmental load reduction.

During the polymerization reaction, if necessary, an additive (C) described later may coexist, and the additive (C) may be added after the polymerization reaction.

When the vinyl monomer (a) is polymerized, a radical polymerization initiator is preferably allowed to coexist. As the polymerization initiator, a photopolymerization initiator and a thermal polymerization initiator can be used. Examples of the photopolymerization initiator include benzophenone, benzyl, Michler's ketone, thioxanthone, anthraquinone, benzoin, dialkoxyacetophenone, acyloxime esters, benzyl ketal, hydroxyalkyl phenone, and halogenoketone. The photopolymerization initiator may be used in combination with a tertiary amine such as methyl amine, diethanolamine, N-methyldiethanolamine, and tributylamine, if necessary. Examples of the thermal polymerization initiator include: azo compounds such as 2,2'-azobis(isobutyronitrile), 2,2'-azobis(2-methylbutyronitrile), 2,2'-azobis(2-methylpropionamidine) dihydrochloride, 4,4'-azobis(4-cyano) valeric acid, and 2,2'-azobis(2-amidinopropane) dihydrochloride; organic peroxides such as benzoyl peroxide, tert-butyl hydroperoxide, tert-butyl peroxypivalate, tert-butyl peroxybenzoate, tert-butyl peroxy-2-ethylhexanoate, di-tert-butyl peroxide, di-tert-butyl hydroperoxide, cumene hydroperoxide, benzoyl peroxide, lauroyl peroxide, decanoyl peroxide, tert-butyl cumyl peroxide, dicumyl peroxide, tert-butyl peroxylaurate, tert-butyl peroxybenzoate, cumene hydroperoxide, and paramentane hydroperoxide; and inorganic peroxides such as hydrogen peroxide, ammonium persulfate, potassium persulfate, and sodium persulfate.

The amount of the radical polymerization initiator relative to a total 100 parts by mass of the vinyl compound is preferably 0.01 parts by mass or more, more preferably 0.1 parts by mass or more, and still more preferably 0.5 parts by mass or more, and is preferably 20 parts by mass or less, more preferably 10 parts by mass or less, and still more preferably 5 parts by mass or less.

The composite resin (A) is preferably dispersed in the aqueous medium (B). A dispersion state of the composite resin (A) can be confirmed by, for example, the presence or absence of a precipitate in the aqueous resin composition.

The content of the composite resin (A) in the aqueous resin composition is preferably 10% by mass or more, more preferably 20% by mass or more, and still more preferably 30% by mass or more, and is preferably 70% by mass or less, more preferably 60% by mass or less, and still more preferably 50% by mass or less.

Examples of the aqueous medium (B) include water, an organic solvent miscible with water, and a mixture thereof. As the organic solvent miscible with water, one type or two or more types may be used. Examples thereof include: alcohol solvents such as methanol, ethanol, n-propanol, isopropyl alcohol, 1,2-propylene glycol, and 1,3-butylene glycol; ketone solvents such as acetone and methyl ethyl ketone; glycol ether solvents such as ethylene glycol-n-butyl ether, diethylene glycol-n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol-n-butyl ether, and tripropylene glycol methyl ether; lactam solvents such as N-methyl-2-pyrrolidone and N-ethyl-2-pyrrolidone; and amide solvents such as N,N-dimethylformamide. An alcohol solvent is preferred.

In consideration of safety and environmental load reduction, the aqueous medium (B) is preferably water alone, or a mixture of water and an organic solvent miscible with water, and more preferably water alone. The content of water relative to 100% by mass of the aqueous medium (B) is preferably 50% by mass or more, more preferably 60% by mass or more, and still more preferably 70% by mass or more, and the upper limit is 100% by mass.

The content of the aqueous medium (B) relative to 100% by mass of the total amount of the aqueous resin composition is preferably 30% by mass or more and 80% by mass or less, and more preferably 50% by mass or more and 70% by mass or less.

The aqueous resin composition of the invention may further contain a crosslinking agent. Examples of the crosslinking agent include an isocyanate crosslinking agent, an epoxy crosslinking agent, an aziridine crosslinking agent, a melamine crosslinking agent, an aldehyde crosslinking agent, an amine crosslinking agent, and a metal chelate crosslinking agent. The crosslinking agent preferably has reactivity with a hydroxy group and/or a thiol group.

Examples of the isocyanate crosslinking agent include: aromatic polyisocyanates such as 2,4-tolylene diisocyanate, 2,6-tolylene diisocyanate, 1,3-xylylene diisocyanate, 1,4-xylylene diisocyanate, hexamethylene diisocyanate, diphenylmethane-4,4-diisocyanate, tetramethylxylylene diisocyanate, 1,5-naphthalene diisocyanate, and triphenylmethane triisocyanate; alicyclic polyisocyanates such as hydrogenated tolylene diisocyanate, isophorone diisocyanate, and 1,3-bis(isocyanatomethyl) cyclohexane; adducts of the aromatic polyisocyanates, the alicyclic polyisocyanates, and polyol compounds such as trimethylolpropane; and biurets and isocyanurates of the aromatic polyisocyanates and the alicyclic polyisocyanates.

Examples of the epoxy crosslinking agent include: bisphenol A/epichlorohydrin type epoxy resins; and diglycidyl compounds such as ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, pentaerythritol polyglycidyl erythritol, and diglycerol polyglycidyl ether.

Examples of the aziridine crosslinking agent include tetramethylolmethane-tri-β-aziridinylpropionate, trimethylolpropane-tri-β-aziridinylpropionate, N,N'-diphenylmethane-4,4'-bis(1-aziridinecarboxyamide), and N,N'-hexamethylene-1,6-bis(1-aziridinecarboxyamide).

Examples of the melamine crosslinking agent include hexamethoxymethylmelamine, hexaethoxymethylmelamine, hexapropoxymethylmelamine, hexaptoxymethylmelamine, hexpentyloxymethylmelamine, hexhexyloxymethylmelamine, and melamine resins.

Examples of the aldehyde crosslinking agent include glyoxal, malondialdehyde, succinedialdehyde, maleindialdehyde, glutardialdehyde, formaldehyde, acetaldehyde, and benzaldehyde.

Examples of the amine crosslinking agent include hexamethylenediamine, triethyldiamine, polyethyleneimine, hexamethylenetetraamine, diethylenetriamine, triethyltetraamine, isophoronediamine, amino resins, and polyamides.

Examples of the metal chelate crosslinking agent include acetyl acetone and acetoacetyl ester coordination compounds of polyvalent metals such as aluminum, iron, copper, zinc, tin, titanium, nickel, antimony, magnesium, panadium, chromium, and zirconium.

The aqueous resin composition of the invention may further contain various additives (C) such as a surfactant, a plasticizer, an antistatic agent, a wax, a light stabilizer, a flow modifier, a dye, a leveling agent, a rheology control agent, an ultraviolet absorber, an antioxidant, a photocatalytic compound, an inorganic pigment, an organic pigment, an extender pigment, a curing agent, a curing catalyst, an emulsifier, and a dispersion stabilizer.

The content of the additive (C) relative to 100 parts by mass of the composite resin (A) is preferably 20 parts by mass or less, more preferably 10 parts by mass or less, and still more preferably 1 part by mass or less.

The aqueous resin composition of the invention can exhibit a strong adhesive force even during adhering of dissimilar base materials, for example, a rubber base material and a resin base material, and can be used widely as an adhesive (preferably an adhesive between the dissimilar base materials).

Examples

Hereinafter, the invention will be described in more detail with reference to Examples, but the invention is not limited by the following Examples, and it is needless to say that the invention can be carried out with appropriate modifications within a range in which the invention can be adapted to the prior gist and the gist described later, and all of the modifications are included in the technical scope of the invention.

(Synthesis Example 1: Synthesis of Polyester Polyol (1))

While introducing nitrogen gas into a reaction vessel equipped with a thermometer, a nitrogen gas introduction tube, and a stirrer, 35.4 parts of isophthalic acid, 17.8 parts of sebacic acid, 7.8 parts of adipic acid, 6.2 parts of ethylene glycol, 22.9 parts of neopentyl glycol, 11.7 parts of 1,6-hexanediol, and 0.03 parts of dibutyltin oxide were charged, and a polycondensation reaction was performed at 180°C to 230°C for 24 hours until the acid value became 1 or less, thereby obtaining a polyester polyol (1) [acid value: 0.6 mgKOH/g, hydroxyl value: 42.5 mgKOH/g].

(Synthesis Example 2: Synthesis of Polyester Polyol (2))

While introducing nitrogen gas into a reaction vessel equipped with a thermometer, a nitrogen gas introduction tube, and a stirrer, 27.6 parts by mass of isophthalic acid, 27.6 parts by mass of terephthalic acid, 11.7 parts by mass of ethylene glycol, 19.9 parts by mass of diethylene glycol, and 0.03 parts by mass of dibutyltin oxide were charged, and a polycondensation reaction was performed at 230°C for 24 hours until the acid value became 1 or less at 180°C to 230°C, thereby obtaining a polyester polyol (2) [acid value: 0.6 mgKOH/g, hydroxyl value: 48.0 mgKOH/g].

(Synthesis Example 3: Synthesis of Polyester Polyol (3))

While introducing nitrogen gas into a reaction vessel equipped with a thermometer, a nitrogen gas introduction tube, and a stirrer, 24.8 parts by mass of 1,6 hexanediol, 20.1 parts by mass of dimethyl 5-sulfoisophthalate sodium, 62.0 parts by mass of ε-caplolactone, and 0.02 parts by mass of tetraisopropyl titanate were charged, and a polycondensation reaction was performed at 180°C to 230°C for 12 hours until the acid value became 1 or less, thereby obtaining a polyester polyol (3) [acid value: 0.3 mgKOH/g, hydroxyl value: 145.0 mgKOH/g] .

(Synthesis Example 4: Synthesis of Polyester Polyol (4))

While introducing nitrogen gas into a reaction vessel equipped with a thermometer, a nitrogen gas introduction tube, and a stirrer, 49.4 parts by mass of 1,4 butanediol, 71.1 parts by mass of adipic acid, and 0.01 parts by mass of tetraisopropyl titanate were charged, and a polycondensation reaction was performed at 180°C to 230°C for 12 hours until the acid value became 1 or less, thereby obtaining a polyester polyol (4) [acid value: 0.3 mgKOH/g, hydroxyl value: 56.0 mgKOH/g].

(Production Example 1: Synthesis of Urethane Resin (1))

In a reaction vessel, 68.0 parts by mass of the polyester polyol (1) of Synthesis Example 1 was dehydrated under a reduced pressure at 100°C, followed by cooling to 80°C, 98.1 parts by mass of methyl ethyl ketone was added thereto, and the mixture was stirred and uniformly mixed. Next, 4.5 parts by mass of 1,4-butanediol and 6.1 parts by mass of 2,2'-dimethylol propionic acid were added, and then 21.5 parts by mass of xylylene diisocyanate was added, and a reaction was performed at 80°C for 12 hours to perform a urethanation step. After finding that the viscosity reached a predetermined viscosity, the thus-obtained product was cooled to 50°C to obtain a hydrophilic group-containing polyurethane resin (I) having a non-volatile content of 51.0%. Next, 4.8 parts by mass of triethylamine was added to the hydrophilic group-containing polyurethane resin (I), and 512 parts by mass of ion-exchanged water was slowly added to make the hydrophilic group-containing polyurethane resin (I) water-soluble. Next, methyl ethyl ketone was removed under a reduced pressure at 30°C to 50°C to prepare a urethane resin (2) having a non-volatile content of 23.0%.

(Production Example 2: Synthesis of Urethane Resin (2))

In a reaction vessel, 75.0 parts by mass of the polyester polyol (2) of Synthesis Example 2 was dehydrated under a reduced pressure at 100°C, followed by cooling to 80°C, 40.0 parts by mass of methyl ethyl ketone was added thereto, and the mixture was stirred and uniformly mixed. Next, 4.5 parts by mass of 2,2-dimethylol propionic acid was added, then 13.3 parts by mass of isophorone diisocyanate was added, and a reaction was performed at 80°C for 12 hours to perform a urethanation step. After finding that the viscosity reached a predetermined viscosity, 0.3 parts by mass of methanol was added, a reaction was further performed for 2 hours, followed by cooling to 50°C, and an organic solvent solution of a urethane prepolymer was obtained.
Further, 320 parts by mass of water was added and sufficient stirring was performed to obtain an aqueous dispersion of a urethane resin, and then the aqueous dispersion was subjected to aging and desolvation to obtain a urethane resin (2) having a non-volatile content of 22% by mass.

(Production Example 3: Synthesis of Urethane Resin (3))

In a reaction vessel, 10.0 parts by mass of methyl ethyl ketone was added to 8.0 parts by mass of the polyester polyol (3) of Synthesis Example 3, followed by stirring and uniform mixing, then 6.1 parts by mass of isophorone diisocyanate was added, and a reaction was performed at 80°C for 3 hours. After the reaction, 8.6 parts by mass of the polyester polyol (4) of Synthesis Example 4 and 7.2 parts by mass of methyl ethyl ketone were added, and a reaction was performed at 80°C for 6 hours to perform a urethanation step. After finding that the isocyanate value became 0.1% or less, 0.1 parts by mass of n-butanol was added, a reaction was further performed for 2 hours, followed by cooling to 50°C, and an organic solvent solution of a urethane prepolymer was obtained.
Further, 58.3 parts by mass of water was added, and sufficient stirring was performed to obtain an aqueous dispersion of a urethane resin, and then the aqueous dispersion was subjected to aging and desolvation to obtain a urethane resin (3) having a non-volatile content of 50% by mass.

(Production Example 4: Synthesis of Urethane Resin (4))

A reaction vessel was charged with 100 parts by mass of ethylene glycol diglycidyl ether having an epoxy equivalent of 132, 10 parts by mass of sodium iodide, 10 parts by mass of 1,8-diazabicyclo [5.4.0]-7-undecene, and 100 parts by mass of N,N-dimethylformamide. Next, carbon dioxide was continuously blown while stirring the mixture, and a reaction was performed at 100°C for 20 hours. The obtained 100 parts by mass of carbonate compound, 31.0 parts by mass of hexamethylenediamine, 18.1 parts by mass of lysine, and 70 parts of N,N-dimethylformamide were added, and a reaction was performed for 24 hours while stirring at a temperature of 70°C. After the reaction, cooling was performed, and 330 parts by mass of water was added, followed by sufficient stirring, and an aqueous dispersion of a urethane resin was obtained. Then, the aqueous dispersion was subjected to aging and desolvation to obtain a urethane resin (4) having a non-volatile content of 25% by mass.

(Production Example 5: Synthesis of Urethane Resin (5))

In a reaction vessel, 67.0 parts by mass of the polyester polyol (1) of Synthesis Example 1 was dehydrated under a reduced pressure at 100°C, followed by cooling to 80°C, 98.0 parts by mass of methyl ethyl ketone was added thereto, and the mixture was stirred and uniformly mixed. Next, 7.1 parts by mass of 2,3-bis(2-mercaptoethylthio) propane-1-thiol and 6.0 parts by mass of 2,2'-dimethylol propionic acid were added, then 18.0 parts by mass of tolylene diisocyanate was added, and a reaction was performed at 80°C for 12 hours to perform a urethanation step. After finding that the viscosity reached a predetermined viscosity, the thus-obtained product was cooled to 50°C to obtain a hydrophilic group-containing polyurethane resin (II) having a non-volatile content of 51.0%. Next, 4.8 parts by mass of triethylamine was added to the hydrophilic group-containing polyurethane resin (II), and 512 parts by mass of ion-exchanged water was slowly added to make the hydrophilic group-containing polyurethane resin (II) water-soluble. Next, methyl ethyl ketone was removed under a reduced pressure at 30°C to 50°C to prepare a urethane resin (5) having a non-volatile content of 23.0%.

(Production Example 6: Synthesis of Urethane Resin (6))

In a reaction vessel, 69.0 parts by mass of the polyester polyol (1) of Synthesis Example 1 was dehydrated under a reduced pressure at 100°C, followed by cooling to 80°C, 93.30 parts by mass of methyl ethyl ketone was added thereto, and the mixture was stirred and uniformly mixed. Next, 3.0 parts by mass of 1,4-butanediol and 6.1 parts by mass of 2,2'-dimethylol propionic acid were added, then 22.9 parts by mass of tolylene diisocyanate was added, and a reaction was performed at 80°C for 12 hours to perform a urethanation step. After finding that the isocyanate value became 0.1% or less, the thus-obtained product was cooled to 50°C to obtain the hydrophilic group-containing polyurethane resin (II) having a non-volatile content of 51.0%. Next, 4.6 parts by mass of triethylamine was added to the hydrophilic group-containing polyurethane resin (II), and 548 parts by mass of ion-exchanged water was slowly added to make the hydrophilic group-containing polyurethane resin (II) water-soluble. Next, methyl ethyl ketone was removed under a reduced pressure at 30°C to 50°C to prepare a urethane resin (6) having a non-volatile content of 23.0%.

(Example 1: Synthesis of Latex Composite Urethane Resin (1))

To 321 parts by mass of the urethane resin (1) obtained in Production Example 1, 126 parts by mass of ion-exchanged water was added, 25.3 parts by mass of isoprene and 6.3 parts by mass of styrene were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (1) having a solid content of 25%.

(Example 2: Synthesis of Latex Composite Urethane Resin (2))

To 305 parts by mass of the urethane resin (2) obtained in Production Example 2, 145 parts by mass of ion-exchanged water was added, 23.0 parts by mass of isoprene and 5.8 parts by mass of styrene were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (2) having a solid content of 25%.

(Example 3: Synthesis of Latex Composite Urethane Resin (3))

To 378 parts by mass of the urethane resin (1) obtained in Production Example 1, 63.5 parts by mass of ion-exchanged water was added, 18.6 parts by mass of isoprene and 18.6 parts by mass of 4-hydroxybutyl acrylate were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (3) having a solid content of 25%.

(Example 4: Synthesis of Latex Composite Urethane Resin (4))

To 269 parts by mass of the urethane resin (3) obtained in Production Example 3, 152 parts by mass of ion-exchanged water was added, 28.8 parts by mass of isoprene and 28.8 parts by mass of glycidyl methacrylate were allowed to react using 0.3 parts by mass of ammonium persulfate (APS) under the condition of monomer batch emulsion polymerization (reaction temperature: 70°C), and 17.6 parts by mass of 2,3-bis(2-mercaptoethylthio) propane-1-thiol was added after cooling to 50°C, and glycidyl was ring-opened. Then, concentration for removing unreacted monomers was performed, and the water content was adjusted, thereby obtaining a latex composite urethane resin (4) having a solid content of 48%.

(Example 5: Synthesis of Latex Composite Urethane Resin (5))

To 296 parts by mass of the urethane resin (4) obtained in Production Example 4, 152 parts by mass of ion-exchanged water was added, 25.3 parts by mass of isoprene and 6.3 parts by mass of styrene were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (5) having a solid content of 30%.

(Example 6: Synthesis and Blending of Latex Composite Urethane Resin (6))

To 321 parts by mass of the urethane resin (5) obtained in Production Example 5, 126 parts by mass of ion-exchanged water was added, 25.3 parts by mass of isoprene and 6.3 parts by mass of styrene were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (6) having a solid content of 25%.

(Comparative Example 1: Synthesis of Urethane Resin (7))

The urethane resin (6) obtained in Production Example 6 was used.

(Comparative Example 2: Synthesis of Latex Composite Urethane Resin (8))

To 321 parts by mass of the urethane resin (6) obtained in Production Example 6, 126 parts by mass of ion-exchanged water was added, 25.3 parts by mass of isoprene, 6.3 parts by mass of styrene, and 42.2 parts by mass of butyl acrylate were allowed to react using 0.3 parts by mass of ammonium persulfate (APS) under the condition of monomer batch emulsion polymerization (reaction temperature: 70°C), then concentration for removing unreacted monomers was performed, and the water content was adjusted, thereby obtaining a latex composite urethane resin (8) having a solid content of 25%.

(Comparative Example 3: Synthesis of Urethane Resin (9))

The urethane resin (4) obtained in Production Example 4 was used.
The obtained latex composite urethane resin was subjected to the following measurements.

[Adhesiveness of Dissimilar Base Materials]

An SBR base material and an NBR base material were attached to a surface to which a coating on PET was performed and dried at 140°C for 20 seconds, compression bonding was performed at about 100°C, and aging was performed for about 2 days. After aging, the PET, SBR, and NBR base materials were peeled off, and the state of the peeled base materials were observed.

A: The material of the PET or the SBR and NBR base materials were broken. Alternatively, the PET, SBR, and NBR base materials were not peeled off.
B: Although the adhesiveness between the PET and the SBR and NBR was found, an adhesive layer remained only on either the PET or the SBR and NBR.
C: The adhesiveness between the PET and the SBR and NBR was hardly found, and the adhesive layer remained only on either the PET or the SBR and NBR.

(Oxygen Permeability: OTR)

The oxygen permeability was measured in an atmosphere of a temperature of 23°C and a humidity of 0% RH and in an atmosphere of a temperature of 23°C and a humidity of 90% RH using an oxygen permeability measuring device OX-TRAN1/50 manufactured by MOCON Corporation in accordance with JIS-K7126 (constant pressure method). RH represents a relative humidity.

(Water Vapor Permeability: MVTR)

The water vapor permeability was measured in an atmosphere of a temperature of 40°C and a humidity of 90% RH using a water vapor permeability measuring device 7001 manufactured by Illinois Corporation in accordance with JIS-K7129.

[Table 1]

| | Example | | | | | | Comparative Example | | |
|---|---|---|---|---|---|---|---|---|---|
| | 1 | 2 | 3 | 4 | 5 | 6 | 1 | 2 | 3 |
| Latex composite urethane resin 1 | 100 | | | | | | | | |
| Latex composite urethane resin 2 | | 100 | | | | | | | |
| Latex composite urethane resin 3 | | | 100 | | | | | | |
| Latex composite urethane resin 4 | | | | 100 | | | | | |
| Latex composite urethane resin 5 | | | | | 100 | | | | |
| Latex composite urethane resin 6 | | | | | | 100 | | | |
| Urethane resin 7 | | | | | | | 100 | | |
| Latex composite urethane resin 8 | | | | | | | | 100 | |
| Urethane resin 9 | | | | | | | | | 100 |
| Functional group PUD side | -OH | -OH | -OH | | -OH | -OH, -SH | - | - | -OH |
| Functional group Lx side | | | -OH | -OH, -SH | | | | | |
| Ratio of urethane | 70 | 70 | 70 | 70 | 70 | 70 | 100 | 70 | 100 |
| Ratio of synthetic rubber latex | 30 | 30 | 30 | 30 | 30 | 30 | 0 | 30 | 0 |
| Adhesiveness (PET/SBR) | A | B | A | A | B | A | C | A | C |
| 0% RH-OTR | 421 | 413 | 332 | 299 | 77 | 459 | 557 | 532 | 89 |
| 90% RH-OTR | 249 | 229 | 179 | 192 | 46 | 265 | 364 | 360 | 51 |
| 90% RH-MVTR | 319 | 179 | 151 | 201 | 44 | 332 | 444 | 451 | 60 |

Examples 1 to 6 were examples of the invention, and when used as an adhesive, the adhesiveness between dissimilar base materials was good, and the gas barrier property was good.

Comparative Example 1 was an example in which a urethane resin not corresponding to a composite resin was not used, and both the adhesiveness between the dissimilar base materials and the gas barrier property were poor.

Comparative Example 2 was an example in which a composite resin having neither a hydroxy group nor a thiol group was used, and the gas barrier property was poor.

Comparative Example 3 was an example in which a urethane resin having a hydroxy group but not corresponding to a composite resin was used, and the adhesiveness between the dissimilar base materials was poor.

**Claims**

1. An aqueous resin composition, comprising:

   a composite resin (A); and
   an aqueous medium (B), wherein
   the composite resin (A) contains a vinyl polymer (A1) and a urethane resin (A2),
   the vinyl polymer (A1) contains a unit derived from a conjugated diene compound, and

the composite resin (A) has a hydroxy group and/or a thiol group.

2. The aqueous resin composition according to claim 1, wherein
the urethane resin (A2) has a hydroxy group and/or a thiol group.

3. The aqueous resin composition according to claim 1 or 2, wherein
the urethane resin (A2) has a content of 0.1 parts by mass or more and 100 parts by mass or less relative to 1 part by mass of the vinyl polymer (A1).

4. The aqueous resin composition according to any one of claims 1 to 3, wherein
the urethane resin (A2) has a weight average molecular weight of 5,000 or more and 500,000 or less.

5. An adhesive comprising:
the aqueous resin composition according to any one of claims 1 to 4.

6. The adhesive according to claim 5, which is an adhesive for rubber.

7. A coating agent comprising:
the aqueous resin composition according to any one of claims 1 to 4.

8. The coating agent according to claim 7, which is used for a paper base material.

## INTERNATIONAL SEARCH REPORT

| | International application No. |
|---|---|
| | PCT/JP2021/028036 |

### A. CLASSIFICATION OF SUBJECT MATTER
Int. Cl. C08L47/00(2006.01)i, C08L75/04(2006.01)i, C09J109/00(2006.01)i,
C09J175/04(2006.01)i
FI: C08L75/04, C08L47/00, C09J175/04, C09J109/00
According to International Patent Classification (IPC) or to both national classification and IPC

### B. FIELDS SEARCHED
Minimum documentation searched (classification system followed by classification symbols)
Int. Cl. C08L47/00, C08L75/04, C09J109/00, C09J175/04

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-531169 A (BASF COATINGS GMBH) 06 October 2016 (2016-10-06), claims 1, 14, 15, paragraphs [0011], [0079], [0148]-[0150], [0170]-[0172], [0186], [0187] | 1-8 |
| A | JP 1-168756 A (ICI AMERICA INC.) 04 July 1989 (1989-07-04), entire text | 1-8 |
| A | JP 9-132707 A (NATIONAL STARCH AND CHEMICAL INVESTMENT HOLDING CORPORATION) 20 May 1997 (1997-05-20), entire text | 1-8 |
| A | JP 2017-532386 A (BASF SE) 02 November 2017 (2017-11-02), entire text | 1-8 |

☒ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25.08.2021 | 07.09.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/028036 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2006-274096 A (KURARAY CO., LTD.) 12 October 2006 (2006-10-12), entire text | 1-8 |
| A | JP 2006-037294 A (NICCA CHEMICAL CO.) 09 February 2006 (2006-02-09), entire text | 1-8 |

Form PCT/ISA/210 (continuation of second sheet) (January 2015)

**INTERNATIONAL SEARCH REPORT**
Information on patent family members

| International application No. |
| --- |
| PCT/JP2021/028036 |

| Patent Documents referred to in the Report | Publication Date | Patent Family | Publication Date |
| --- | --- | --- | --- |
| JP 2016-531169 A | 06.10.2016 | US 2016/0152862 A1<br>claims 1, 14, 15,<br>paragraphs [0010],<br>[0091], [0166]-<br>[0168], [0187]-<br>[0189], [0203], table<br>1<br>WO 2015/007427 A1<br>EP 3022242 A1<br>CN 105377931 A<br>KR 10-2016-0031540 A | |
| JP 1-168756 A | 04.07.1989 | US 4927876 A<br>entire text<br>EP 309113 A1 | |
| JP 9-132707 A | 20.05.1997 | US 5945473 A<br>entire text<br>EP 747442 A2 | |
| JP 2017-532386 A | 02.11.2017 | US 2017/0226377 A1<br>entire text<br>WO 2016/016286 A1<br>EP 3174910 A1<br>CN 106795266 A | |
| JP 2006-274096 A | 12.10.2006 | (Family: none) | |
| JP 2006-037294 A | 09.02.2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06199968 A
- JP 2004231852 A
- JP 2004224868 A

**Non-patent literature cited in the description**

- *Bulletin of the American Physical Society, Series 2,* 1956, vol. 1 (3), 123